# EUROPEAN PATENT APPLICATION

(11) **EP 1 074 326 A2**
(43) Date of publication of application: **07.02.2001**
(21) Application number: 00114562.2
(22) Date of filing: 06.07.2000
(51) Int. Cl.: B23D 45/10, B23D 59/00

(54) **Cutting machine with a device for accurately aligning a circular saw and associated notching tool**

(30) Priority: 07.07.1999 IT BO990374
(71) Applicant: SELCO SPA, 61100 Pesaro (IT)
(72) Inventor: Naldi, Valter, 40100 Bologna (IT)
(74) Representative: Eccetto, Mauro

(57) **Abstract**

A machine (1) for cutting a pack (3) of panels (2), and having a frame (4) in turn having a work table (14); a tool carriage (7); members (86) for clamping the pack (3) to the work table (14); a longitudinal gap (15); and a cutting unit (17) carried by the carriage (7) and having a circular saw (42) and a notching tool (51). The main characteristic of the invention lies in the machine (1) having a control unit (60) for processing characteristic parameters of the saw (42) and the notching tool (51), and first means (71) for effecting horizontal movements of the notching tool (51) along a horizontal axis (43a).

## Description

The present invention relates to a cutting machine with a device for accurately aligning a circular saw and associated notching tool.

Wood panels or similar are normally cut on machines comprising a frame approximately the same size as, but no smaller than, the panels for cutting; a straight guide integral with one edge of the frame and extending in a given horizontal direction; a carriage running along the guide; and a cutting unit mounted on the carriage to cut the panels parallel to said horizontal direction.

The cutting unit normally comprises a circular saw, which projects from a longitudinal gap formed in a horizontal bed integral with the frame on which a pack of panels is placed, so as to cut the pack in a vertical plane parallel to the horizontal traveling direction of the carriage. The pack is clamped, during the cutting operation, by pressure members; and the circular saw is powered by a drive unit, which, to reduce width, is supported on the carriage, beneath the saw, and is connected to the saw by a speed reducer, e.g. a belt reducer.

Cutting machines of the above type normally comprise a notching tool - also in the form of a circular saw, but much smaller in diameter than the one used to cut the pack of panels - which, as the carriage moves towards the pack of panels, precedes the circular saw to cut a groove in the underside surface of the pack. This is particularly desirable in the case of veneered chipboard panels, to enable the circular saw to work its way out of the pack without chipping the edges of the cut made by the saw. That is, any panels on the top or within the pack are gripped firmly between the pressure member and the work table, so that the topside surface of each panel effectively supports the underside surface of the panel on top, thus ensuring a clean cut. The underside surface of the bottom panel in the pack, however, lies directly on the work table, astride the cutting gap in the table, and is therefore particularly susceptible to chipping by the saw as this works its way out of the pack.

As a result, the bottom panel is invariably cut poorly, especially, as stated, in the case of veneered chipboard. To ensure perfect cutting of both the outer surfaces of all the panels in the pack, most cutting machines are therefore equipped with notching tools for cutting a groove and so preventing chipping of the edges of the cut made in the underside surface of the bottom panel in the pack. The notching tool rotates in the opposite direction to the circular saw, and normally cuts the bottom panel to a depth of a couple of millimeters. Problems are encountered, however, in aligning the circular saw with the notching tool. That is, to achieve the desired effect, the cut made by the circular saw must be located within and perfectly centered with respect to the groove made by the notching tool on the underside surface of the pack. For example, the groove made by the notching tool must be 0.05 mm wider on both sides with respect to the cut made by the circular saw, but not much wider than the saw blade, to avoid forming a step on the underside surface of the panel, which would ultimately lead to problems at the panel finishing (e.g. edging) stage.

Alignment is normally done manually by the operator making a number of test cuts, and is therefore considerably time-consuming, considering that, on this type of machine, the circular saw is changed every 2-3 hours, and manually aligning the saw with the notching tool normally takes 15-20 minutes.

It is therefore an object of the present invention to provide a cutting machine with a device for accurately aligning a circular saw and associated notching tool.

According to the present invention, there is provided a cutting machine as claimed in Claim 1.

A non-limiting embodiment of the present invention will be described by way of example with reference to the accompanying drawings, in which:
Figure 1 shows a panel cutting machine comprising a device in accordance with the present invention;
Figure 2 shows a larger-scale section, with parts removed for clarity, of a detail of the Figure 1 machine;
Figure 3a shows a larger-scale plan view of part of the Figure 1 machine;
Figure 3b shows a larger-scale view of a Figure 3a notching tool and relative actuating devices;
Figure 4a shows a larger-scale view of a notching tool with a substantially trapezoidal cross section;
Figure 4b shows a larger-scale view and respective geometric parameters of a circular saw and respective notching tool;
Figure 5a shows a pack of panels and an enlarged view of a cut made by a circular saw and aligned correctly with respect to a groove made by a notching tool;
Figure 5b shows a plan view of the Figure 5a cut and groove;
Figure 6a shows a pack of panels and an enlarged view of a cut made by a circular saw and misaligned with respect to a groove made by a notching tool;
Figure 6b shows a plan view of the Figure 6a cut and groove.

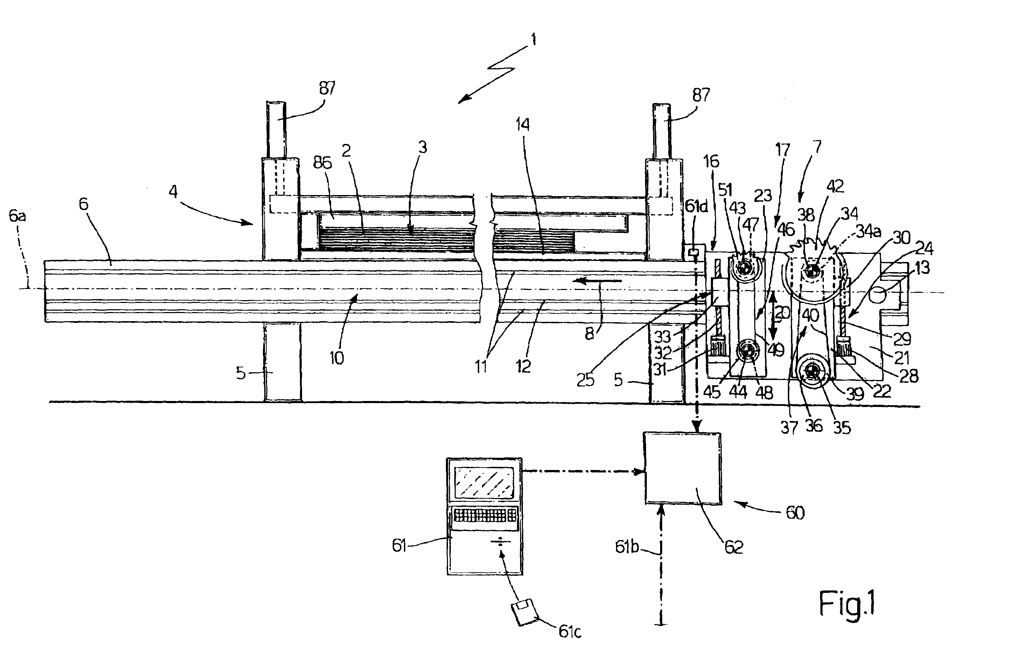

Number 1 in Figure 1 indicates as a whole a cutting machine for cutting panels 2 - preferably, but not necessarily, wood panels, even of considerable size and weight - stacked neatly to form thick packs 3.

Machine 1 comprises a frame 4, in turn, comprising two vertical supporting posts 5, and a work supporting beam 6 integral with posts 5 and having a substantially horizontal axis 6a. Machine 1 also comprises a tool carriage 7 mounted to run along beam 6 in a direction 8 parallel to axis 6a of beam 6. More specifically, beam 6 is fitted laterally with a guide device 10 for guiding carriage 7 and defined by two longitudinal guides 11 integral with beam 6 and both extending parallel to axis 6a along the full length of beam 6. Guide device 10 also comprises a rack 12, which is integral with beam 6, is located between and extends parallel to guides 11, and cooperates with an actuating device 13 carried by and for powering carriage 7.

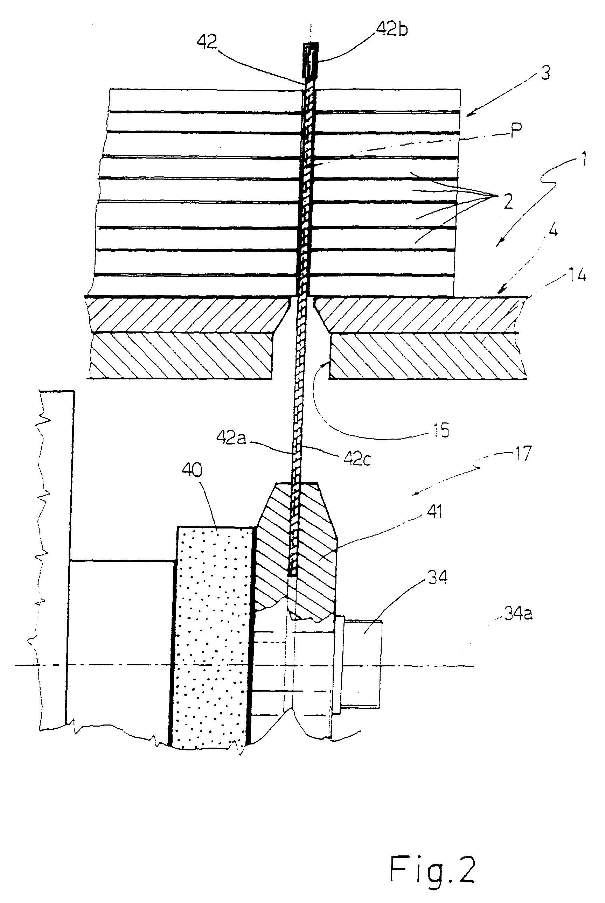

With reference to Figures 1 and 2, frame 4 also comprises a horizontal work table 14 onto which panels 2 are loaded. Table 14 is fixed to the top of beam 6, between vertical posts 5, and has a longitudinal gap 15 (Figure 2) extending the full length of table 14, parallel to axis 6a, and defining the cutting plane of panels 2. Actuating device 13 moves carriage 7 along beam 6 to and from a rest position - to the right in Figure 1 - in which carriage 7 is located at an end portion of beam 6 to enable panels 2 to be loaded and unloaded on and off work table 14, and to enable, when necessary, manual or automatic replacement of the tools on carriage 7.

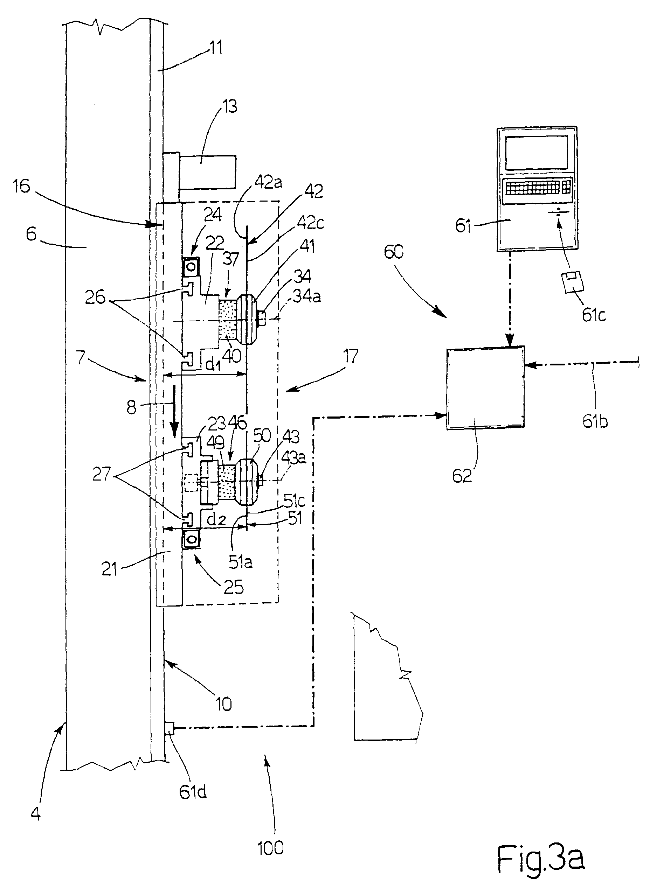

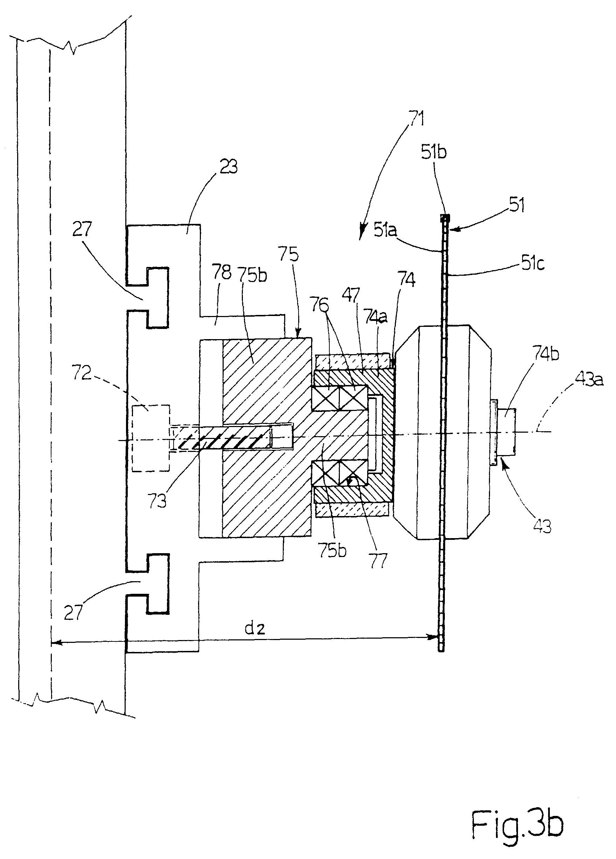

With reference to Figure 1, tool carriage 7 comprises a box-type supporting frame 16, which is mounted to slide along guides 11 and is fitted integrally with actuating device 13 of carriage 7; and a cutting unit 17 carried by box frame 16 and in turn comprising a vertical plate 21 supporting two slides 22 and 23 moved in a vertical direction 20 by respective actuating devices 24 and 25. More specifically, for each slide 22, 23, plate 21 comprises a respective pair of dovetail guides 26, 27 (figures 3a, 3b) for supporting and guiding respective slide 22, 23 in direction 20. Device 24 comprises an electric motor 28 fitted to plate 21; a worm 29 extending in direction 20 and fitted to the drive shaft of motor 28; and an internally threaded vertical sleeve 30 integral with and projecting from slide 22, and engaged internally by worm 29. Via the worm 29-sleeve 30 coupling, rotation of the drive shaft of motor 28 moves slide 22 in direction 20. Similarly, device 25 comprises an electric motor 31 fitted to plate 21; a worm 32 extending in direction 20 and fitted to the drive shaft of motor 31; and an internally threaded vertical sleeve 33 integral with and projecting from slide 23, and engaged internally by worm 32.

Slide 22 is fitted with two projecting shafts 34 and 35 with respective horizontal axes perpendicular to direction 8. Shaft 35 is the drive shaft of an electric motor 36 fitted to slide 22, is lower than shaft 34, and transmits power to shaft 34 via a transmission device 37 defined by a pulley 38 fitted to shaft 34, a pulley 39 fitted to shaft 35, and a transmission belt 40 fitted between pulleys 38 and 39. Shaft 34 is fitted with a spindle 41 in turn fitted with a rotary tool 42 defined by a circular saw for cutting panels 2 in a plane perpendicular to the axis 34a of rotation of shaft 34.

Slide 23 is fitted with two projecting shafts 43 and 44 with respective horizontal axes perpendicular to direction 8. Shaft 44 is the drive shaft of an electric motor 45 fitted to slide 23, is lower than shaft 43, and transmits power to shaft 43 via a transmission device 46 defined by a pulley 47 fitted to shaft 43, a pulley 48 fitted to shaft 44, and a transmission belt 49 fitted between pulleys 47 and 48. Shaft 43 is fitted with a spindle 50 in turn fitted with a rotary tool 51 defined by a circular saw or so-called notching tool for notching panels 2, before they are cut by saw 42, in a plane perpendicular to the axis 43a of rotation of shaft 43. Notching tool 51 is rotated by motor 45 in the opposite direction to saw 42. In the Figure 1 embodiment, saw 42 rotates anticlockwise, and notching tool 51 clockwise.

Slides 22 and 23 are therefore movable in direction 20, so that respective predetermined portions of saw 42 and notching tool 51 project from work table 14 and run along gap 15 to cut panels 2, and so that the portion of circular saw 42 projecting from work table 14 can be adjusted according to the height of pack 3 of panels 2 on work table 14, and the portion of notching tool 51 projecting from table 14 can be adjusted according to the required notching depth.

Machine 1 also comprises a control unit 60, which has an operator control panel 61 for entering the operating parameters of machine 1, and controls actuating device 13 of carriage 7, actuating devices 24, 25 of slides 22, 23, and motors 36, 45 via an electronic central control unit 62.

With reference to Figures 1 and 3a, machine 1 also comprises a device 100, in accordance with the present invention, for accurately aligning any circular saw 42 and associated notching tool 51 on the basis of a number of parameters relative to teeth 42b and 51b of saw 42 and notching tool 51 respectively. The parameters are determined, for example, on a test bench (not shown), and may be entered onto unit 60 either manually from control panel 61, or electronically over a data transmission line 61b or by means of a file stored on a floppy disk 61c by means of a respective disk 61c reading system. In an alternative solution, each tool is assigned a code (e.g. an optical bar code) representing the tool parameters; in which case, unit 60 must be provided with a code reader 61d.

As explained In more detail later on, the parameters relative to each tooth 42b, and possibly of each tooth 51b, provide for determining corresponding movements of notching tool 51 along axis 43a and, possibly, in vertical direction 20.

With reference to Figures 3a and 3b, slide 23 supports a device 71 for moving notching tool 51 parallel to itself along axis 43a. Device 71 is controlled by central control unit 62, and comprises an electric motor 72, the drive shaft of which is fitted with an externally threaded shaft 73 of axis 43a; electric motor 72 is supported by slide 23 and located between slide 23 and plate 21; shaft 43 is defined by two axially-connected, angularly-disconnected portions 74 and 75; portion 74 comprises a first portion 74a on which pulley 47 is formed, and a second portion 74b supporting spindle 50; portion 75 comprises an externally splined, internally threaded first sleeve portion 75a engaged by shaft 73, and a second portion 75b extending, via the interposition of ball bearings 76, inside a dead hole 77 formed in first portion 74a of portion 74; slide 23 supports an internally splined sleeve 78 engaged by first portion 75a of portion 75; and, since portion 75 is prevented from rotating by the splined coupling of sleeve 78 and portion 75a, rotation of shaft 73 moves shaft 43 along axis 43a.

In an alternative solution to the one shown, motor 72 may be replaced by a knob for manually adjusting the position of notching tool 51 along axis 43a; and a similar knob may obviously also be used in place of motor 31 to move notching tool 51 manually in direction 20.

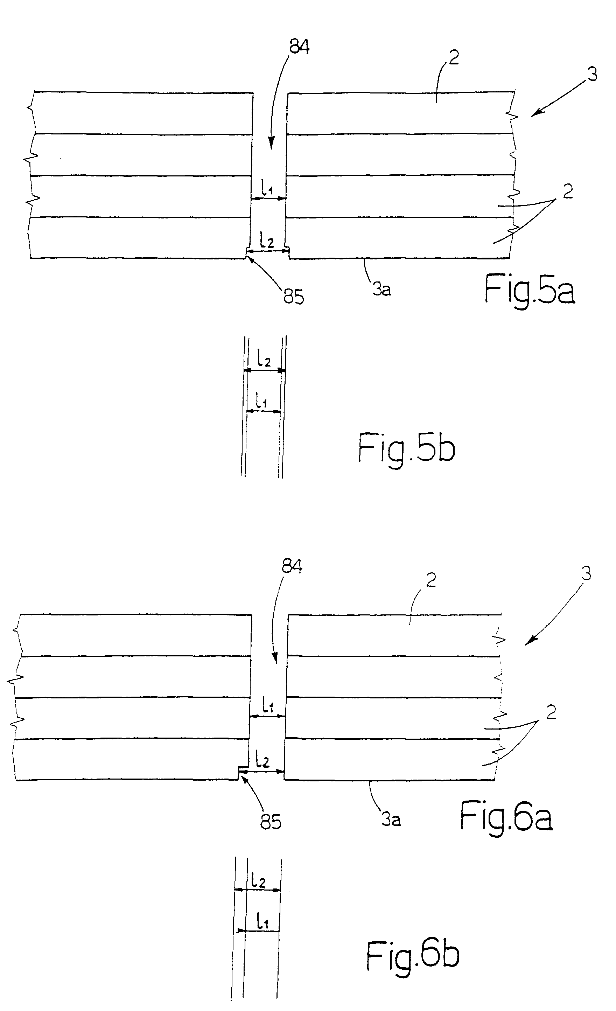

In actual use, once loaded with the parameters of teeth 42b of saw 42, control unit 60 can calculate the actual width 11 (Figures 5a and 5b) of the cut 84 that will be made by saw 42, and, on the basis of the parameters of teeth 51b of notching tool 51, can also calculate how far notching tool 51 must be moved along axis 43a to obtain a groove 85 of width 12, and with respect to which cut 84 is centered perfectly.

Figures 6a and 6b show the situation in which cut 84 made by saw 42 is off-centered with respect to groove 85. This is an anomalous configuration, also in view of the fact that, in extreme situations, i.e. with notching tool 51 misaligned with respect to saw 42, cut 84 may even be outside groove 85 altogether, so that the saw comes out directly through the underside surface 3a of pack 3, with all the obvious negative consequences described previously as regards chipping of the edges of cut 84.

All the above considerations presuppose a predetermined thickness of teeth 42b and 51b, so that one alignment - in particular, of notching tool 51 along axis 43a - is sufficient to center the two tools. Since, however, in some cases, it may prove difficult to maintain the relationship between saw 42 and the same notching tool 51 - especially when saw 42 is sharpened - it is preferable to use a notching tool 51 with trapezoidal teeth and, as stated, move notching tool 51 in direction 20 to adjust and adapt the width of groove 85 to the width of cut 84 - obviously altered when saw 42 is sharpened - so that the same notching tool 51 can even be used with saws with teeth 42b of different thicknesses.

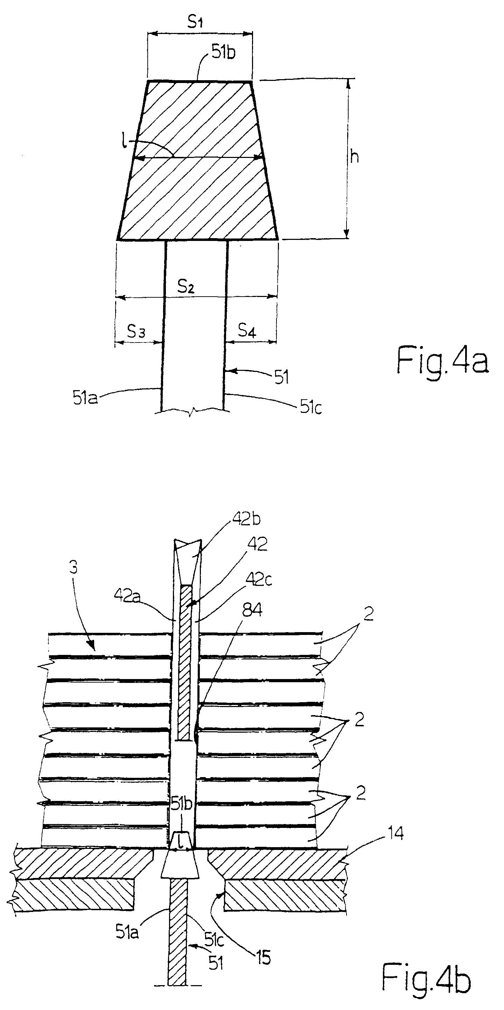

As stated, when using a trapezoidal-section notching tool 51 as shown in Figures 4a and 4b, to align the notching tool 51 with a number of saws 42 of widely differing thicknesses, notching tool 51 must also be moved vertically with respect to plate 21 (Figure 1) by means of device 25.

As shown in Figures 4a and 4b, by raising or lowering notching tool 51, it is possible to adjust the width 1 of groove 85 by exploiting the trapezoidal shape of the tooth 51b section. In the example shown, the minimum and maximum widths 1 of groove 85 obviously equal the minimum and maximum widths S1 and S2 respectively of the tooth 51b section. In other words, it is possible either to move groove 85 on the underside surface 3a of pack 3, or increase or reduce the width 1 of groove 85, as a function of the minimum and maximum deviations of teeth 42b of saw 42. Such deviations are extremely small and must obviously be compatible with the width of gap 15.

Now, if S is the thickness of teeth 42b, A is the deviation of tooth 42b from the surface 42a of saw 42, and I is the thickness of tooth 51b of notching tool 51 to be calculated, a series of commands may be performed, on the basis of the parameters of teeth 42b, to determine the alignment of notching tool 51 and the width of groove 85. That is, assuming A = 2 mm and S = 4.4 mm are the reference parameters of a precision saw 42, and that all the teeth on saw 42 show A = 2.1 mm and S = 4.4 mm, to obtain a groove 85 wider by 0.1 mm than cut 84, with the extra width divided into 0,05 mm on either side of the center line of cut 84, notching tool 51 must be moved 0.1 mm (the difference between 2.1 and 2 mm) away from frame 4 along axis 43a, and moved in direction 20 so that the thickness I of the part of tooth 51b determining groove 85 equals 4.5 mm. In the event teeth 42b all show A = 1.9 mm and S = 4.4 mm, notching tool 51 must be moved 0.1 mm (the difference between 1.9 and 2 mm) towards frame 4, and moved in direction 20 so that I equals 4.5 mm. Finally, in the event A differs from one tooth to another, e.g. ranges between 2.05 and 2.15 mm, and S of all of teeth 42b equals 4.4 mm, thus actually resulting in a cut 84 of 4.5 mm width, notching tool 51 must be moved 0.05 mm (difference between 2.05 and 2 mm) away from frame 4, and moved in direction 20 so that I equals 4.6 mm. The above operations are obviously controlled by unit 60.

The above cases only take into account the deviation of tooth 42b with respect to surface 42a. If the parameters also include the deviation of tooth 42b with respect to surface 42c, however, the width of cut 84, and hence the alignment of notching tool 51 along axis 43a and in direction 20, may obviously be determined more accurately to determine the correct width of groove 85 and center the groove with respect to cut 84.

Depending on the precision required, the parameters may obviously relate to either all or only a limited number of teeth 42b of saw 42.

The main parameters required by unit 60 to control correct alignment of notching tool 51 are : the distance between the sides of teeth 42b and reference surfaces 42a and 42c of saw 42; the thickness of teeth 42b; the width S1 (Figure 4a) of the top of tooth 51b; the width S2 of the base of tooth 51b; the deviations S3 and S4 of the apexes of tooth 51b from reference surfaces 51a and 51c of notching tool 51; the height h and taper of tooth 51b; the thickness 1 of tooth 51b, even the point-to-point thickness from the base to the top of the tooth; and the distance between the top of tooth 51b and the axis of rotation of notching tool 51. All these parameters may be determined directly on the test bench or by data processing.

Cutting machine 1 is operated in the normal way as regards the cutting operation, which will now be described as of the operating condition in which a pack 3 is located on work table 14 in the cutting position, and carriage 7 is set to the rest position with tools 42 and 51 rotating and ready to cut and notch pack 3 respectively. In the cutting position, pack 3 is maintained integral with frame 4 by a pressure device 86 (Figure 1) extending parallel to axis 6a, and which exerts vertical pressure on pack 3 by virtue of two linear actuators 87 fixed to posts 5. When actuating device 13 is operated, carriage 7 is fed in direction 8 at the traveling speed set by the operator to feed saw 42 and notching tool 51 along gap 15 and into contact with pack 3 to cut panels 2. Actuating device 13 feeds carriage 7 up to an end-of-work position in which pack 3 is cut through completely by saw 42; at which point, device 13 returns carriage 7 to the rest position, after first lowering cutting unit 17 beneath work table 14 in known manner.

## Claims

1. A machine (1) for cutting a pack (3) of panels (2), and comprising:
a frame (4) having a work table (14);
a tool carriage (7) mounted to run along a beam (6) of said frame (4) in a horizontal direction (8) parallel to the axis (6a) of said beam (6);
an actuating device (13) for moving said carriage (7) in said horizontal direction (8);
members (86) for clamping said pack (3) to said work table (14);
a longitudinal gap (15) extending the full length of said work table (14) and defining the cutting plane; and
a cutting unit (17) carried by said carriage (7) and having a circular saw (42) and a notching tool (51);
characterized by comprising a device (100) for processing data and controlling alignment of the saw (42) and said notching tool (51); said device (100) comprising a control unit (60) for processing a number of characteristic parameters of said saw (42) and said notching tool (51), and first means (71) for effecting horizontal movements of said notching tool (51) along a horizontal axis (43a).

2. A machine as claimed in Claim 1, characterized in that said first means (71) are manually operated.

3. A machine as claimed in Claim 1, characterized in that said first means (71) are powered and, in particular, controlled by said control unit (60).

4. A machine as claimed in Claim 2 and/or 3, characterized in that said device (100) comprises second means (25) for effecting vertical movements of said notching tool (51) in a given direction (20); said control unit (60) processing said parameters to activate said second means (25) accordingly and effect the desired vertical movements of said notching tool (51) in said given direction (20).

5. A machine as claimed in any one of the foregoing Claims, characterized in that said control unit (60) is connected to a control panel (61) by which said parameters are transmitted to said control unit (60).

6. A machine as claimed in any one of Claims 1 to 4, characterized in that said control unit (60) comprises a data transmission line (61b) by which said parameters are entered onto said control unit.

7. A machine as claimed in any one of the foregoing Claims, characterized in that said control unit (60) comprises a system for reading an electronic floppy disk (61c) on which said parameters are stored.

8. A machine as claimed in any one of the foregoing Claims, characterized in that said control unit (60) comprises a reader (61d) for reading a code associated with said saw (42) and said notching tool (51) and relative to the parameters of said saw (42) and said notching tool (51).

9. A machine as claimed in any one of the foregoing Claims, characterized in that said parameters are relative to characteristics of said saw (42) and said notching tool (51), such as, the distance between the sides of the teeth (42b) and reference surfaces (42a, 42c) of said saw (42); the thickness of the teeth (42b) of said saw (42); the width (S1) of the top of the tooth (51b) of said notching tool (51); the width (S2) of the base of the tooth (51b) of said notching tool (51); the deviations (S3, S4) of the apexes of the tooth (51b) of said notching tool (51) from the reference surfaces (51a, 51c) of said notching tool (51); the height (h) and taper of the tooth (51b) of said notching tool (51); the thickness (l) of the tooth (51b) of said notching tool (51); and the distance between the top of the tooth (51b) of said notching tool (51) and the axis of rotation of said notching tool (51).
